(19) Europäisches Patentamt
European Patent Office
Office européen des brevets

(11) **EP 4 428 815 A1**

(12) **EUROPEAN PATENT APPLICATION**

(43) Date of publication:
**11.09.2024 Bulletin 2024/37**

(21) Application number: **23160524.7**

(22) Date of filing: **07.03.2023**

(51) International Patent Classification (IPC):
**G06T 7/11** (2017.01)

(52) Cooperative Patent Classification (CPC):
**G06T 7/11;** G06T 2207/10104; G06T 2207/10108;
G06T 2207/20081; G06T 2207/20084;
G06T 2207/20092; G06T 2207/30056;
G06T 2207/30096

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Koninklijke Philips N.V.
5656 AG Eindhoven (NL)**

(72) Inventor: **OKEL, Sanne Emmarentia
Eindhoven (NL)**

(74) Representative: **Philips Intellectual Property &
Standards
High Tech Campus 52
5656 AG Eindhoven (NL)**

(54) **INTERACTIVE IMAGE SEGMENTATION OF ABDOMINAL STRUCTURES**

(57)  An input data preprocessor (IDP) and related methods for facilitating image segmentation. The preprocessor may comprise an input port (IN) for receiving an input image to be segmented by an interactive machine learning based segmentor (SEG). A subset specifier (SS) determines, based on the input image, a size specification (b) for an in-image subset. An output interface (OUT) passes the size specification to a user interface (UI) for interaction with the segmentor (SEG). The proposed input data preprocessor (IDP) may preferably be used in interactive segmentation, to reduce the number of iteration cycles.

**FIG. 1**

**Description**

FIELD OF THE INVENTION

The invention relates to an input data preprocessor for facilitating image segmentation, to a related method, to a system using such a preprocessor in particular for segmentation, to a medical imaging arrangement, to a training system for training a machine learning model for implementing such as preprocessor, to a related training method, to a computer program element, and to a computer readable medium.

BACKGROUND OF THE INVENTION

Medical imaging is a first-line mainstay of medicine, at least since discovery of X-rays by Wilhelm Roentgen in the 19th century. Being able to see "inside" the patient non-invasively is invaluable for diagnosis, therapy, panning and other medical tasks.

Segmentation of medical imagery is another useful tool in the arsenal of image-based medicine. Segmentation, a type of image processing, allows conferring medical meaning to the imagery. It assists the user, such as a radiologist or other medical user, to find quickly and safely structures of interest in the imagery during image review sessions for example. The imagery may not always be easy to interpret: for example, the imagery may be high dimensional, with high resolution pixel density, and it may not always be easy, especial under pressure due to workload etc, to quickly locate and distinguish interfacing structures of interest therein. Being able to quickly navigate and distinguish image information is also a consideration in therapeutic image-guided interventions, with added real-time pressure, such as in a cath lab during cardio-vascular applications for example. In such scenarios, projection imagery from various spatial directions may be acquired which adds complexity in locating structures of interest and medical tools for example, such as catheter, etc. Thus, medical imaging coupled with segmentation adds even more value. In addition, certain organs may present as highly complex spatial structures. Examples include tumor tissues in abdominal anatomies, such as in an and around the pancreas. This makes it at times for the clinical user difficult to tell "which is which". This is a particularly unfortunately combination of circumstances, as pancreatic cancer happens to be one of the deadliest cancer types around.

Recently, medical machine learning ("ML") powered segmentation algorithms have been used which can produce impressive results, but sometimes fall short of expectations in producing output which is not up to clinical standard. Certain interactive medical segmentation algorithms have been proposed, where the user can provide additional input data, to better guide the machine learning model in its segmentation task. However, such user interactive models have led to user fatigue as it is sometimes required for the user to intervene many times over, in order to achieve an acceptable result. This may be prohibitive in clinical settings, which face large numbers of patients, due to an ever aging population, but also due to backlogs caused by pandemics for example, or because of work force drain, or any other reason.

SUMMARY OF THE INVENTION

Thus, there may be a need for improvement in the medical field, in particular, in making image-based tasks more efficient in clinical practice.

An object of the present invention is achieved by the subject matter of the independent claims where further embodiments are incorporated in the dependent claims.

It should be noted that the following described aspect of the invention equally applies to the related method, to the system using such the preprocessor in particular for segmentations, to the medical imaging arrangement, to the training system for training the machine learning model for implementing such as preprocessor, to the related training method, to the computer program element, and to a computer readable medium.

According to one aspect there is provided an input data preprocessor for facilitating (medical) image segmentation , comprising, when in use:

an input port for receiving an input image to be segmented by an interactive machine learning based segmentor;
a subset specifier configured to determine, based at least on the input image, a size specification (b) for an in-image subset; and
an output interface for passing the size specification to a user interface or segmentor for interaction with the segmentor.

The pre-processor that may be used with any interactive segmentation model. The preprocessor ensures that the user input (eg circle) is of the "right" size to improve performance of the interactive segmentation operation, with fewer user interactions (such as "clicks"). Performance may be measured by a Dice index for overlaps (in the set theoretic sense of intersections) of segmentation output with ground truth, for a given number of interactions for example.

In embodiments, the subset size specifier is based on a trained machine learning mode. The machine learning model of the subset size specifier may be different from the model used for the segmentor. However, an integrated model for both is also contemplated in some embodiments.

The subset specification is in general different from a segmentation, as the earlier may not follow edges or contours, but may also include background image material, whereas a segmentation is generally designed to follow such contours. The specified subsets are general more liberally cast, and are to designate an area on which the subsequent segmentation by segmentor is to primarily focus, or to which area more weight is attachable in the subsequent segmentation.

In embodiments, the said size specification includes a geometrical parameter of the in-image subset.

In embodiments, the said geometrical parameter is at least one any one or more of i) a radius or diameter of the in-image subset, ii) a diagonal of the in-image subset, iii) a length of the in-image subset, iv) a volume of the in-image subset.

In embodiments, the said subset specifier configured to determine the size specification, further based on a previous size specification provided by a user via a user interface.

In another aspect there is provided herein a user interface, configured to allow a user to define a subset specification in an input image in relation to an image structure by setting out a direction vector alongside the structure or thereacross. This direction vector may than be expanded in a geometric shape that represents the subset to be specified. The setting of the direction vector may be supported as drag along or across operation, as stroke, gestures, etc. The user interface may be used with any interactive segmentor. The user interface may be used in combination with the input data preprocessor, but may also be used without it. The use interface may be provides a graphical user interface ("GUI").

In embodiments, the subset specifier is further to specify a shape and/or position of the in-image subset.

In embodiments, the subset specifier is to determine the size specification based on the medical purpose of the segmentation.

In embodiments, the subset is an n-ball/n-1-sphere, with n=2,3, or any one or a more of a polygon/polyhedral, such as bounding box, a free-line curve, closed or open, or any other.

In embodiments, the user input interface includes any one or more of i) a pointer tool, ii) a touch screen, iii) speech recognizer/NL component, iii) a keyboard. The speech recognizer/NL component may translate user's verbal descriptions into such subset specification, such as size.

In embodiments, the segmentation is for an abdominal region of interest and/or a cancer lesion.

In embodiments, the abdominal region of interest includes at least a part of any one or more of liver, pancreas, pancreatic duct, pancreatic cancer tissue.

In another aspect there is provided a system of medical image segmentation comprising, the input data preprocessor of any one of the above embodiments, and one or more of: the interactive machine learning based segmentor and the user interface.

In embodiments, the system includes a subset adaptor configured to adapt a size of a previous subset, based on the size specification.

In embodiments, the machine learning model of the segmentor and/or of the machine learning model of the subset specifier is configured so that a resolution of data propagatable through the respective model is maintained.

In embodiments, the input data preprocessor is part of the segmentor.

In embodiments, the segmentor is to compute a segmentation result (s) based on i) the input image, and on a subset of the input image receivable via the user interface and the said subset having the specified size as per the input data preprocessor.

According to yet another aspect, there is provided a medical arrangement comprising the system of any one of the above aspects or embodiments, and any one or more of i) a medical imaging apparatus supplying the input image, ii) a memory from which the input image is retrievable, iii) a resectability index computing unit configurable to compute at least one resectability index based on the segmentation result.

According to yet another aspect, there is provided a machine learning training system configured to train, based on training data, the machine learning model of the subset specifier (SS) as per any one of the above aspects or embodiments.

In some embodiments, the training system is driven by a cost function having weights that depend on an in-image distance from a structure already segmented in a previous training cycle. According to yet another aspect, there is provided a training data generator system, configured to generate the training data for training for training system.

In embodiments, the training data generator system is capable to operate in training of a first machine learning model for interactive image segmentation based on a first training data set including a subset size specification for a subset in imagery of the first training data set, wherein the training data generator system is to: vary the said size specification to produce different training results in the training of the first machine learning model, and to evaluate such results, and, based on the evaluated results, provide a second training data as the training data.

According to yet another aspect, there is provided a training data generator system, configured to operate in training of a first machine learning model for interactive image segmentation based on a first training data set including a subset size specification for subset in imagery of the first training data set, wherein the training data generator system is to: vary the said size specification to produce different training results in the training of the first machine learning model, and to evaluate such results, and, based on the evaluated results, provide a second training data for training a second machine learning model so that the second machine learning model is capable to determine, in deployment, based on input imagery, a subset size specification for use in interactive segmentation of such imagery. The second training data may include instances of the varied subset size specifications in association with respective training input imagery used in training of the first machine learning model. Evaluation may be based in an output of an objective function used in the training of the first machine learning model.

In another aspect there is provided an arrangement including the training system of any one of the above mentioned aspect or embodiments, and the training data generator system in any of the above mentioned aspects or embodiments.

In another aspect there is provided a use of i) the training data generator system in a system for training a first machine learning model for interactive image segmentation, and ii) use of the training data generated by the training data generator system (TDGS) of any of the above mentioned aspects of embodiments, in a system for training a first machine learning model for interactive image segmentation.

According to yet another aspect, there is provided a computer implemented method for facilitating medical image segmentation, comprising:

> receiving an input image to be segmented by an interactive machine learning based segmentor;
> determining, based at least on the input image, a size specification for an in-image subset; and
> providing the size specification to a user interface for interaction with the segmentor.

According to yet another aspect, there is provided a method for training, based on training data, the machine learning model of the subset specifier as per any one of the above mentioned aspect or embodiments.

According to yet another aspect, there is provided a method of generating at least a part of the training data for the method of training.

According to yet another aspect, there is provided at least one computer program element, which, when being executed by at least one processing unit, is adapted to cause the at least one processing unit to perform the method.

According to yet another aspect, there is provided at least one computer readable medium having stored thereon the program element, or having stored thereon the machine learning model of subset specifier.

Thus, the subset-specifier may operate to dynamically adapt at least a size of user input that specifies in-image subsets for use with interactive segmentation algorithms that co-process such combined input - the image and the subset specification, possibly adapted by subset specifier to the determined size - to compute the segmentation of the said image. The segmentor includes a computer-based implementation of a segmentation algorithm/arrangement of the interactive type, configured to accept such additional input (the subset specification) alongside the actual image. The subset size specification may be integrated in the image, or may be provided separately from the input image as a distinct data item, depending on implementation. However, in either case the subset size specification is additional information, over and above the information in the original input image and is result of an image processing operation, either by user of by the subset specifier. In the following the subset size specification may simply be referred to as the "subset specification", with the understanding that such specification may include more information than size. That is, the subset specification (the subset so specified) may relate to an image structure (such as its size, shape, or location etc) as per the input image. This image structure may be an initial one in the image, or one that was segmented before by the segmentor in a previous cycle, as the segmentor supported by the input data (pre)processor may be used in iterative-interactive manner, one or more times over. Over the course of such interaction/segmentor cycles, changed/adapted such subset specifications are provided via user interface by user, possibly adapted (replaced) by the subset specification determined by the subset specifier.

Subset specifier's operation may not only be based on image information (image structure, etc), but may also be based in addition on contextual data, such as may be found in imaging protocols, metadata, or as data specifically supplied by user through interface UI (or through another (user) interface). The contextual data may define (such as by a medical code) the purpose of the imaging, which resulted in the input image, and/or may define the intended segmentation purpose. Thus, the determined size specification may correspond to size, shape, location etc of an image structure relevant to the task, but may also take into account the said purpose of imaging or segmentation task at hand. Thus, the determined size specification may call for a size that is larger or smaller than a certain image structure size (representation of an organ/part thereof, cancer/non-cancerous tissue/lesion, etc) in the input image that is medically appropriate and advisable for the medical purpose/task at hand. The image structure size may be understood as an in-image-representation of an organ or anatomy, or part thereof, or of tissue such cancer/non-cancerous tissue/lesion, etc. The determined subset specification may represent an in-image subset (a subset of voxels or pixels). The in-image subset defined by the subset-specification may cover a certain image structure of interest, or may merely overlap or may osculate the said image structure, as required. For example, the subset-specification may focus on an edge portion of the image structure. The subset specification may or may not represent an in-image set that is topologically connected.

The proposed system input data preprocessor allows boosting performance of in particular machine learning implemented segmentation algorithms, preferably of the interactive type. User input in terms of subset-specification to the segmentor may be adapted beforehand herein by subset specifier to correspond in size and/or location, etc to image structures in the given input image, thus leading to fewer required user interactions down the line to achieve a set performance level. Thus, the proposed input data preprocessor may preferably be used in interactive segmentation setups, to reduce the number of interactive iteration cycles. More Specifically, one objective herein is to reduce the number of such interactive segmentation cycles, that is, the number of times input is passed to the segmentor, given a certain segmentation performance level. Performance level can be objectively quantized by relating segmentation performance to the required number of interactions, given a set segmentation level. Segmentation performance can be measured using a number of scores or metrics, such as Dice-score based or similar, using validation/test data including ground truth. With the user input adapted as per the proposed system, performance of interactive segmentation can outperform non-interactive fully automatic segmentors but also other interactive segmentation setups, in particular in the applications that call for segmentation of abdominal structures and or cancer tissues in connection with such abdominal structures.

Operation of input data preprocessor may be based on the analysis of the input image, which is either an initial/original image, or a previously segmented image from an earlier segmentation cycle. This image input image may be received at input port of the specifier of input data preprocessor. The, optionally also machine learning based, subset specifier then processes the input image to output through its output interface, the size specification of the sub-set, which is to be considered by the segmenter in the next cycle. Thus, in the next cycle, input image may be co-processed by the segmenter together with the sub-set size specification as provided, suggested, or otherwise mediated by the input data processor. Thus, the segmenter combines both information items, the sub-set size information and the input image, and co-processes the combined data to produce the segmented image having a segmentation that is either final image, or that may serve as an intermediate segmentation result is a follow-up cycle(s), and so forth. Thus, the system may operate in user-controlled iteration over one or more segmentation cycles. In the first or subsequent iterations, the segmenter co-processes the input image or segmentation(s) of previous cycles with the current sub-set specification. Thus, the sub-set specification may be updated, based on the current segmentation result, until the final segmentation is defined.

Operation of the subset specifier may be corrective or suggestive, and/or may be prospective or retrospective, as needed.

In some embodiments, the user interface includes a pointer tool. In some such or other embodiments, the user interface is configured to allow user define a length along, or even across, an image structure, thus demarking the structure. Such demarking interaction by one or more drag/stroke-operations have been found to be better received by some medical practitioners, than click-operation interaction that sets predefined geometrical shape areas, such as circles, etc, into the input image. However, such click-operation type interactions using a pointer tool is not excluded herein.

Research has shown that for certain image structures which are defined by image areas using certain click radii leads to a reduced need for clicks to reach the same segmentation quality indicators. As during the training of a machine-learning model for segmenting images the images are segmenting the image using the set of one or more clicks the radius of the clicks can easily be adjusted and the effect of this adjustment can be evaluated. Where the set of one or more clicks is a simulated set of clicks the radius can be varied between sets of clicks and the resulting corresponding segmentation can be compared and the optimum radius can be selected, associated in the machine learning model to the segmented image and later on, when the learned machine learning model is used to segment other images in an interactive way by accepting clicks from a user, to suggest an appropriate click radius for use with the click input tool to the user so the user does not only not have to select this radius herself/himself but also results in a lower amount of clicks required to reach required segmentation quality indicators.

During the training of a machine-learning model for segmenting images the set of one or more clicks can also be derived from a user instead of, or in addition to, simulation. In this case the radius of the clicks as entered by the user is varied while for instance keeping the centers of the clicks at the same position and subsequently comparing the segmentation quality indicators for the various click radii used, thus optimizing the machine-learning model for segmenting images.

In an embodiment of the machine-learning model for segmenting images the first click radius and the second click radius are selected based on a property of an image area to be segmented.

Research has shown that smaller structures tend to require fewer clicks when a relatively small click radius is used while larger structures tend to require fewer clicks when a relatively large click radius is used. However, when using the machine-learning model for segmenting images for medical images there is also an opposite correspondence between structure size and click radius. However by varying the click radii during the training phase while at the same time training the image segmentation, the proper association between image structure size respectively anatomical structures will be learned.

Although some of the above and the description below may be referring to user input in the form of clicks, strokes, gestures, scribbles, etc, any other form/type of specifying or indicating a subset (in particular its size) in a given image, such as an area in an image, can equally be used herein as are indeed envisaged.

Whilst the above has been described mainly with application in the medical field, non-medical applications are not excluded herein, and neither are segmentations for other than for abdominal structures.

Whilst the input data pre-processor, as described above, is preferably implemented as a machine learning model, either on its own/standalone model or in combination with the segmenter model, such ML implementation is not necessary in all embodiments, instead, non-machine learning models are also envisaged. For example, the input data pre-processor may be represented as a look-up table (LUT) where suitable sub-set sizes are tabled against structure sizes or purposes (imaging purpose, segmentation purpose, clinical objective), etc. Thus, the subset specifier may look up the most appropriate size specification and suggest this to the user, or auto-apply same. As mentioned, the subset sizes for user interaction with the segmentor may also be derived not only from image data itself, but also from certain metadata that may be found in the header datafile of the imagery to be segmented. Such data may be indicative of the purpose/clinical objective of the intended segmentation.

In addition still, the input data pre-processor may use other, eg non-machine learning based, approaches, such as classical, analytical segmentation (region-growing, snakes, contour modelling etc). A first segmentation run may be applied to the input image to segment some structures, and compute for example a suggested size for subsets for input sub-set size adaptation or suggestion. At times, analytical segmentation method may be computationally cheaper than using machine learning. However, such analytical pre-segmentation may likely yield a large number of structures, whilst the ML powered embodiments of the subset specifier may be able to better estimate the task relevant image structures from the overall appearance of the image alone, or based on the contextual data.

The following refers to other embodiments where subset size specification is in terms of radii, but this is not limiting as any other subset specifications are also envisaged, so in the below and reference to "*first*", "*second*", "*radii/radius*", "*location*", etc, may be replaced by "*first subset (size) specification*" or "*second subset (size) specification*", respectively.

In one aspect there is provided a computer-implemented method of training a machine-learning model for segmenting images comprising image areas to be segmented, comprising:

- receiving an input training dataset comprising a set of images;
- receiving a set of one or more clicks having click locations and a click radius for a first image of the set of images indicating an area to be segmented in the first image,
- segmenting the image using the set of one or more clicks, and
- evaluating a result of the step of segmenting the image based on set segmentation quality indicators (such as cost function, utility function driving the segmentation, etc),

  wherein the step of segmenting the image is performed using a first click radius resulting in a first set of segmentation quality indicators and using a second click radius resulting in a second set of segmentation quality indicators;
  associating the first click radius with the first image if the first set of segmentation quality indicators is higher than the second set of segmentation quality indicators, respectively associating the second click radius with the first image if the second set of segmentation quality indicators is higher than the first set of segmentation quality indicators in the machine learning model.

In embodiments, the set of one or more clicks is a set of one or more simulated clicks.

In embodiments, the set of one or more clicks is a derived from a user.

In embodiments, the first click radius and the second click radius are selected based on a property of an image area to be segmented.

In some aspects there is provided a computer-implemented method of segmenting images comprising image areas to be segmented, comprising:

- receiving an image;
- obtaining from a first trained machine learning model as obtained by the method , a click radius;
- providing the image to a user
- providing a click input tool having the click radius to the user;
- receiving one or more click locations from the click input tool;

- producing from a second trained machine learning model an output dataset comprising a segmented image using the received image, the received one or more click locations and the click radius.

In embodiments, the image areas to be segmented comprising providing the segmented image to the user

In embodiments, the set of one or more clicks is a derived from the user during the execution of the computer-implemented method of segmenting images comprising image areas to be segmented.

In another aspect there is provided an ML training system comprising

- a receiver arranged for receiving an input training dataset comprising a set of images;
- a receiver for receiving a set of one or more clicks having click locations and a click radius for a first image of the set of images indicating an area to be segmented in the first image,
- a processing unit arranged for segmenting the image using the set of one or more clicks, and
- an evaluator arranged for evaluating a result of the step of segmenting the image based on set segmentation quality indicators,

wherein

the processing unit is further arranged to segment the image using a first click radius resulting in a first set of segmentation quality indicators and using a second click radius resulting in a second set of segmentation quality indicators;

and is further arranged for associating the first click radius with the first image if the first set of segmentation quality indicators is higher than the second set of segmentation quality indicators, respectively associating the second click radius with the first image if the second set of segmentation quality indicators is higher than the first set of segmentation quality indicators in the machine learning model.

In embodiments, the set of one or more clicks is a set of one or more simulated clicks.

In embodiments, an ML training system comprises click input tool arranged to receive the set of one or more clicks from a user.

In embodiments, the ML training system comprises a selector arranged to select the first click radius and the second click radius based on a property of an image area to be segmented.

In another aspect there is provided an ML system for segmenting images comprising image areas to be segmented, comprising:

- a receiver for receiving an image;
- a processing unit arranged for obtaining a click radius from a first trained machine learning model as obtained by the method;
- a display arranged for providing the image and a click input tool having the click radius to a user;
- the click input tool being arranged for receiving one or more click locations from the user;
- the processing unit further being arranged for producing from a second trained machine learning model an output dataset comprising a segmented image using the received image, the received one or more click locations and the click radius.

In general, the term "*machine learning*" includes a computerized arrangement (or module) that implements a machine learning ("ML") algorithm. Some such ML algorithms operate to adjust parameters of a machine learning model that is configured to perform ("learn") a task. Other ML operate direct on training data, not necessarily using such as model. This adjusting or updating of parameter based on training data set is called "training". In general performance of task by the ML module may improve measurably, with training experience. Training experience may include suitable training data and exposure of the model to such training data. Task performance may improve the better the data represents the task to be learned. Training experience helps improve performance if the training data well represents a distribution of examples over which the final system performance is measured. The performance may be measured by objective tests based on output produced by the module in response to feeding the module with test or validation data. The performance may be defined in terms of a certain error rate to be achieved for the given test data. See for example, T. M. Mitchell, "Machine Learning", page 2, section 1.1, page 6, section 1.2.1, McGraw-Hill, 1997.

"*subset (specification)*" is any data that defines a subset (sub-area, region portion) of the relevant image (initial input image, intermediate image, ect) The subset (specification may be provided by user in the interactions, or as adapted/computed by the subset specifier. The specification may describe any one or more of size as mainly envisaged, location, shape. The specification may be explicit, such as "*k* pixels/voxels across", or "*k* pixels/voxels long", and/or may be a geometric equation of loci, etc. Implicit definition may include ostensive definition by example or instance, such as an image mask (binary or probabilistic), which represents the subset und thus, implicitly, its in-image size, location (within the image), shape etc. Implicit definition may also include a mark-up in the relevant image, such as by superposition of mask and image, or other. The subset specification may indeed be encoded in the relevant image, such as by such markup or by metadata, or in any other way. The above described various manners of subset/subset specification/definition, etc, may apply to any one of training, training data generation, or deployment/inference, as described herein. For present purposes, at times, the subset specification (whether user provided or determined by the subset specifier herein) may be identified with the subset itself. Thus, the segmentor or subset specifier may operate on the specification and/or the subset (the image values that are comprised by the subset), as required and according to implementation. Thus, short-hand language may be used herein such as when referring to the "subset specification "covers" a certain image structure (or not)", this being unambiguous for the subset defined by the subset specification to covering the image structure (or not). This shorthand may relate to other statements herein in relation to the subset specification.

BRIEF DESCRIPTION OF THE DRAWINGS

Exemplary embodiments of the invention will now be described with reference to the following drawings, which are not to scale, wherein:

Fig. 1 shows a block diagram of a medical imaging arrangement preferably for interactive image segmentation;
Fig. 2 shows a machine learning model as may be used in machine learning based segmentation or in facilitating such segmentation;
Fig. 3 shows a block diagram of a training system for training a machine learning model;
Fig. 4 shows a flow chart of a computer-implemented method for facilitating medical segmentation of imagery;
Fig. 5 shows a slow chart of a computer-implemented method of generating at last parts of training data for training a machine learning model; and
Fig. 6 shows a flow chart of a computer-implemented method of training a machine learning model.

DETAILED DESCRIPTION OF EMBODIMENTS

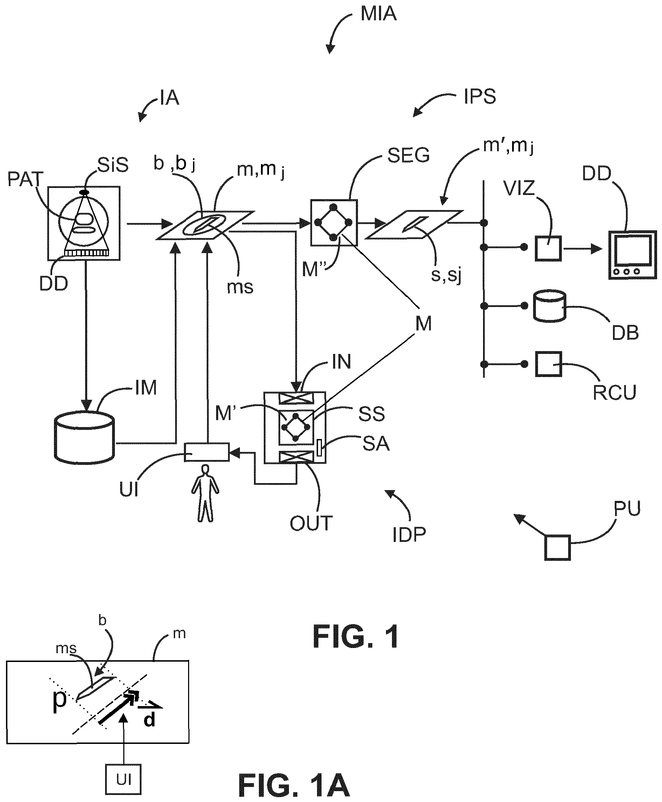

Reference is now made to Fig. 1, which shows a block diagram of a medical imaging arrangement MIA. The medical imaging arrangement MIA may include a medical imaging apparatus IA of any suitable modality that is operable to acquire, in an imaging session, imagery of a patient PAT, or of a part (region of interest, "ROI") of patient PAT. The medical imaging arrangement MIA may further include an imaging processing system IPS that may be arranged on one or more computing platforms PU. The imaging session may take place in an exam room of a medical facility, such as a hospital, clinic, a GP practice, etc.

Broadly, imagery acquired by imaging apparatus IA may be processed by the image processing system IPS to produce segmented image m'. Specifically, image processing system IPS may process a received input image $m$ to produce the segmented image $m'$. The input image $m$ may be received direct through wired or wireless connection in an online environment for example from the imaging apparatus IA as it is acquired in the exam room. Alternatively, the input image $m$ is first stored postacquisition in a preferably non-volatile memory IM (a database, storage, or other image repository such as a PACS, etc), and may then be retrieved from there at a later stage after the image session, when and if needed, for example, when image review is conducted by radiologist, etc. Suitable interface/retrieval system may be run by a computing system, such workstation, that is used to request the image $m,$ and its segmentation.

The computer-based image processing system IPS itself may be run on one or more computing platforms PU, processing units, etc, and the like, that may be arranged either in software or hardware or partially in both. A single such platform or computing system PU may be used, such as indeed the said workstation or other, to implement all or parts of the image processing system IPS. Alternatively or in addition, there may be multiple such platforms PU and the whole or parts of the functionality of the image processing system IPS is effectively distributed across those platforms, such as in a distributed computer environment, in a Cloud setting etc.

The segmented image m' produced by the image processing system IPS may be stored in another image storage DB or in the same data image storage IM from which the input image m was received. Alternatively, or in addition, the segmented image m' may be visualized by a visualizer VIZ on a display device DD for visual inspection by a medical user to inform therapy or diagnosis. In addition or instead, the segmented image m' may be otherwise processed such as it may be used for planning or to control medical equipment, etc, whatever the medical task at hand that can be usefully supported by clearly defined segmented imagery as is obtainable herein. In one embodiment, the segmented image m' may be used in an oncological setting. For example, the segmented image m' may be used by a resectability index computing unit RCU to compute a resectability index $r$, in order to assess viability of removing cancer tissue from a patient PAT. The resectability index $r$ provides an indication of the manner and degree in which cancer- and non-cancerous tissues are intermeshed, and whether or not there is tissue interface of sufficient definition, along which the cancerous tissue may be removed with some prospect of success. The accuracy of the resectability index *r* computation rest much on the detailed and accurate segmentation in order to distinguish tissue types. Thanks to the good quality segmentation results obtainable herein, accuracy of resectability index *r* computations may be improved.

Whilst the present application is mainly envisaged for medical imaging, in particular for oncological support, other medical applications, or indeed non-medical applications, are also envisaged herein. However, in the following we will be exclusively referring to medical applications, but, again, this is not at the exclusion of non-medical uses or other medical applications as envisaged herein for the proposed image processing system IPS.

The image processing system IPS affords efficient, and in some cases, superior segmentation results, in particular for abdominal structures, such as the pancreatic duct (PD), the pancreas, liver, or a combination thereof. The segmentation result is superior in a sense that it offers good results at lower user involvement, which is both of consideration in the medical field where stress, user fatigue etc is often encountered.

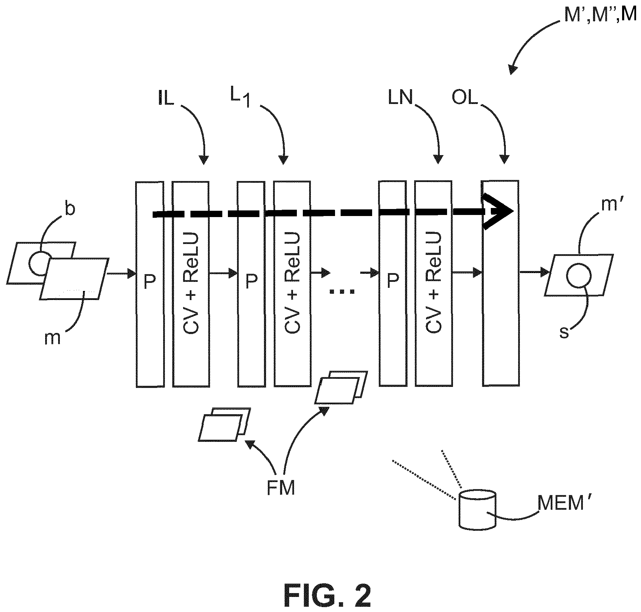

The image processing system IPS includes a segmentation component SEG which is preferrable driven by machine learning. In other words, the segment SEG includes, or is implemented by, a trained machine learning model M", previously trained on suitable training data by a computer-implemented training system TS. Training aspects will be explained in more detail below from about Fig. 2 onwards, whilst the following up to this point will mainly focus on deployment, that is, the post training phase. Briefly, in machine learning ("ML"), training and deployment are different phases of use of the segmenter SEG, or of the image processing system IPS more generally. Training may be a one-off operation, or may be repeated as new training data becomes available, as required. Training may also occur during deployment in some embodiments.

The segmentation set-up SEG as envisaged herein is in particular of the interactive machine learning ("IML") type, also referred to at places as "interactive artificial intelligence" ("IAI"). Interactive machine learning in general allows user to provide input, over an above the actual input image *m* to be segmented. Specifically, the segmentation result m' is not only computed based on the actual input image *m* itself, but also based on user input (data). The user input is considered by the segmenter SEG in addition to the input image to compute the segmentation result m'. The user input may represent domain knowledge, expressed in terms of the input image. The user input may form useful contextual data in relation to the imaging objective and purpose which may be considered by the segmentor SEG when computing the segmented image m' from the input image m.

Functionality of the IML-based image processer IPS is optionally iterative, in that the user may repeatedly, in one or more cycles *j*, provide the user input in respective of various intermediate segmentation results mj as may be produced by the segmenter SEG, until a clinically acceptable result m' can be achieved. Such interactive ML-based segmentation systems SEG are in contrast to non-interactive ones, which are fully automatic and compute the segmentation there without any user input. However, it has been observed that in certain such IML segmentation scenarios, such as the one including involved structures at various scales as may often be encountered in cancerous tissues in abdominal structures, the user input can usefully target and channel the power of the machine learning model M", to focus on certain regions of interest and therefore deliver superior results in some cases, even over non-interactive ML. Thus, the proposed system IPS is a good example where user's capability operates in useful conjunction with machine learning capabilities, as opposed to pitching "man against machine".

Segmentation generally is the computer-implemented operation of conferring meaning to an image. It may be conceptualized as a classification task. An image is a spatial data structure, in either 2D, 3D or 4D, as acquired. Image values make up the image, and are arranged spatially as image elements (pixels or voxels) in either 2D matrix or 3D matrix/tensor, or even in a 4D structure such as time series of 3D volumes. Any imaging apparatus or modality is envisaged herein such as X-ray, spectral (eg, dual energy imaging), CT, MRI, PET/SPECT, US, or any other. Image structures are sub-sets of such image values in the image. Variations across image values, their spatial distribution, confer image contrast and thus give rise to (image) structures. Some of the image structure(s) represent background, whilst others represent the spatial extent, shape, distribution etc, of different tissue types, organs, groups of organs/tissues, solids (foreign object, internal medical devices, etc) or fluids, such as contrast agents as may be used in some imaging protocols, etc. Spectral imaging is particularly envisaged herein in some X-ray based embodiments. In segmentation on an image element level (or on patches thereof), a classification label is assigned by segmentor SEG per image element, which represents a certain tissue, organ or material of interest. By segmenting substantially all image elements, their classification labels can be used by visualizer VIZ to suitably visualize the segmented image by label-based color or greyvalue coding. This allows better semantic visualization and differentiation, where definitions of different image regions represent respectively different tissues, organs, materials of interest. The medical user can thus interpret the image to derive added value for diagnosis and/or therapy, or other. Image structures may have spatial interfaces (borders, edges, etc) of high geometrical complexity, possibly with finely, intricately intertwined transitions from one tissue type to the other, making such tissue interfaces difficult to discern. In such scenarios, good segmentation capability provided by the proposed interactive setup, combined with high image resolution, affords competitive differentiation between different tissue/organ types or materials.

Before explaining the image processing system IPS for segmentation purposes in more detail, reference is now made first in more detail to the imaging apparatus IA to provide more context, and to better assist the latter, more in depth explanations, on operation of the imaging processing system IPS.

Generally, the imaging apparatus IA may include a signal source SiS and a detector device DeD. The signal source SS generates a signal, for example an interrogating signal, which interacts with the patient to produce a response signal which is then measured by the detector device DeD and converted into measurement data such as the said medical imagery. One example of the imaging apparatus or imaging device is an X-ray based imaging apparatus such as a radiography apparatus, configured to produce protection imagery. Volumetric tomographic (cross sectional) imaging is not excluded herein, such as via a C-arm imager or a CT (computed tomography) scanner, or other.

During an imaging session, patient may reside on a patient such as patient couch, bed, etc), but this is not necessary as the patient may also stand, squat or sit or assume any other body posture in an examination region during the imaging session. The examination regions is formed by the portion of space between the signal source SiS and the detector device DeD.

For example, in a CT setting, during imaging session, X-ray source SiS rotates around the examination region with the patient in it to acquire projection imagery from different directions. The projection imagery is detected by the detector device DeD, in this case an x-ray sensitive detector. The detector device DeD may rotate opposite the examination region with the x-ray source SS, although such co-rotation is not necessarily required, such as in CT scanners of $4^{th}$ or higher generation. The signal source SS, such an x-ray source (X-ray tube), is activated so that an x-ray beam XB issues forth from a focal spot in the tube during rotation. The beam XB traverses the examination region and the patient tissue therein, and interacts with same to so cause modified radiation to be generated. The modified radiation is detected by the detector device DeD as intensities. The detector DeD device is coupled to acquisition circuitry such as DAQ to capture the projection imagery in digital for as digital imagery. The same principles apply in (planar) radiography, only that there is no rotation of source SS during imaging. In such a radiographic setting, it is this projection imagery that may then be examined by the radiologist. In the tomographic/rotational setting, the muti-directional projection imagery is processed first by a reconstruction algorithm that transforms projection imagery from projection domain into sectional imagery in image domain. Image domain is located in the examination region. Projection imagery or reconstructed imagery will not be distinguished herein anymore, but will simply be referred to collectively as (input) imagery/image $m$. It is such input imagery $m$ that may be processed by system IPS.

The input imagery $m$ may however not necessarily result from X-ray imaging. Other imaging modalities, such as emission imaging, as opposed to the previously mentioned transmission imaging modalities, are also envisaged herein such as SPECT or PET, etc. In addition, magnetic resonance imaging (MRI) is also envisaged herein in some embodiments.

In MRI embodiments, the signal source SS is formed by radio frequency coils which may also function as detector device(s) DD, configured to receive, in receive mode, radio frequency response signals emitted by the patient residing in a magnetic field. Such response signals are generated in response to previous RF signals transmitted by the coils in transmit mode. There may dedicated transmit and receive coils however in some embodiments instead of the same coils being used in the said different modes.

In emission imaging, the source SS is within the patient in the form of a previously administered radio tracer which emits radioactive radiation that interacts with patient tissue. This interaction results in gamma signals that are detected by detection device DD, in this case gamma cameras, arranged preferably in an annulus around the examination region where the patient resides during imaging.

Instead of, or in addition to the above mentioned modalities, ultrasound (US) is also envisaged, with signal source and detector device DeD being suitable acoustical US transducers.

Turning now to the image processing system IPS in more detail, and with continued reference to Fig. 1, this includes preferably, not only the segmenter SEG but also an input data processer IDP that is operable in conjunction with the segmenter SEG. In a distributed computing setting, the input data processer IDP may be arranged on one computing platform, whilst the segmenter SEG may be arranged on another platform, possibly remotely from each other, and the two may be inter-connectable in a wireless or wired or hybrid networking setup. For example, the input data processer IDP may be run on a computer platform such as a laptop, tablet, smart phone, workstation etc, operable by the user, whilst the segmenter SEG is run on a server, possibly remotely located from the input data processer IDP computing platform. For example, the computing platform that runs segmenter SEG may be arranged offsite a medical facility, whilst the input data processer IDP computer platform is resident onsite, as required.

It has been observed that in interactive machine learning arrangements, the nature of the user input that is provided and co-processed with the input image m has a bearing on the overall performance of the segmenter SEG. In particular, it has been observed that the user input in some interactive segmentation settings includes specifications of sub-sets in the input image M to be segmented. These sub-set specifications may relate to the clinical objective the user wishes to achieve and in general includes at least parts of the structure the user wishes to have segmented.

Such sub-set specifications are often definable/specifiable with a pointer tool which is one example of the many embodiments of user interface UI envisaged herein. Such and other embodiments of the user interface UI are envisage herein that allow user to specify such subsets. The specification may include an in-image size (such as number of pixel/voxels across) and location whin the image plane/volume of the input image m. For example, a stylus or computer mouse may be used by user to specify a sub-set of the input image for input in segmentor SEG alongside the image m itself. The user may operate the user interface UI to specify, for example, a circular figure, such as a circle, a ball, an ellipse/ellipsoid, or a bounding box ("bbox"), such as rectangular/square/prism, a triangle, or other polygon, or indeed any other geometrical figure. The dimensionality of the subset is preferably a function of the dimensionality of the input image *m*. For example, a 3D-shaped subset may be specified for a 3D image *m,* whilst a 2D shape-subset may be used for a 2D image. Specification of Lebesgue-zero-measure-subsets are also envisaged, wherein the dimensionality of the specified subset is lower than the dimensionality of the surrounding image volume. UI's with through-dimension subset-propagation may be used, where user specifies in a lower dimension initially, but the through-dimension-functionality of the UI then propagates or expands the initial specification into a higher spatial dimension, with adaptation to local structures along propagation depth. For example, in tomographic imagery, for a volume *m*, user may specify subset in one or more slices. The subset is then propagated through a number of adjacent slices, essentially expanding the initially specified 2D subset(s) into s sub-volume of the input volume m, thus yielding a 3D subset. In the following, without ambiguity, we will use the notion "b" to refer to the subset specification or to the subset so specified as one defines the other.

No matter the shape, the boundary of the geometrical figure/shape *b* so specified demarks the image region that the user believes includes the image structure of interest for which the segmentation is intended. That is, the areal volume covered by the geometrical figure, specifies the sub-set which includes, in its area or volume, at least some parts, preferably all, of the structure of interest *ms.* The specification (size, location and, optionally, shape type) of the sub-set *b* is driven by the user's domain knowledge, such as clinical knowledge mainly envisaged herein, whilst some specification parameters (eg, shape) may be preset.

The sub-set specification *b* describes the input image in relation to the structure of interest ms. It may specify a group or sub-set of co-ordinates. Alternatively, it may be defined by an analytical formula for loci that constitute the geometrical figure such as center and radius/diameter of a circle, or of any other geometrical figure, as required.

One way of specifying such a sub-set as envisaged herein is by "clicking into" the image m using pointer tool UI, whilst the image is visualized on the display device DD. Thus, a pointer tool such as stylus or computer mouse, or other may be used. In general, pointer tools are operable to translate user induced physical motion into motion of a pointer symbol on screen of display device. They further allow selecting image points or regions via locations visited by the pointer symbol. An event handler detects a user-system interaction event, such as the said click event, and associates the current on-screen position of a pointer symbol with a subset associable with the pointer position. For example, when user clicks on a region/point in the image at or around the structure of interest *ms,* a graphical sub-set delineator, such as the said circle or ball, sphere, etc may be brought up for optional visualization together with the input image on display DD. The sub-set delineator is a graphical representation of the so specified subset. Such a one-click interaction is preferred which causes expansion into the subset as described. However, multipoint interactions are not excluded, where multiple points are set around the structure of interest ms, and, upon the user issuing a further confirmatory event or after a preset number or point have been so set, a surface is formed or a curve is run to join the points, or at least enclose, the set points, thus setting the subset b. Thus, as envisaged herein, the sub-set specification b may be by specified via such a pointer tool (mouse, stylus), or indeed by touch-screen action. As an example of single-point interaction, center point of circle is set, which is expanded in a circle at a certain radius. As mentioned earlier, circles are merely one example of such subset definition. Any other shapes may be used, and the circle or other shape for subset b may be specified other than by mouse click action. It is also understood herein that a visualization of the subset as a geometrical figure/shape is not strictly required, as all that matters herein is a spatial definition of the subset (eg, in terms of coordinates or other), and the processing thereof by the segmenter SEG, and not so much the displaying of specified subset b, although such displaying is preferred herein. Once the subset is specified, it is understood that the sub-set b describes or at least relates, to a clinical objective or property of the image, in particular relates to location/region of structure of interest *ms,* whilst said structure in turn relates to the said clinical objective pursued by user.

The described pointer tool is an example of user input interface UI for interaction with segmentor SEG. Any other input interface UI type, not necessarily of the single-point type, may be envisaged herein for the user to describe aspects of image structure as per the input image, in respect of the clinical objective to be achieved. However, in the following we will sometimes refer to as a user interaction as "clicks". But this is exemplary or representative of any other means of user input provision, as using a computer mouse with the familiar click operation is a prevalent user interface. Other manners of UI interaction are specifically included herein. An example of another such UI will be described in more detail below. In addition, one objective herein is to reduce interactive segmentation cycles, that is, the number of times user input is passed to the segmentor SEG. Any given such user input may require one ("single-point/click") or more than one ("multi-point/click") input operations to define any given subset specification in a given cycle.

For example, in another embodiment the user may simply use scribbles, a free-line curve, to roughly circumscribe the structure of interest ms. In another embodiment, the user merely defines a direction vector $\vec{d}$, for example by using a pointer tool, to drag along the structure of interest *ms* with the length of this drag interaction corresponding roughly to

a projection $\pi$ of a length dimension of the image structure ms. Such drag-alongside type interaction is indeed envisaged in some embodiments. Such drag-alongside type interaction functionality may be preferred by medical practitioners over the more familiar click type operations described above, where a predefined geometrical shape, such a circle, is set into the image. This type of "drag-alongside" interaction is illustrated in the inset of Fig. 1A, where the drag-alongside operation is indicated by the arrow $\vec{d}$ ("drag vector"), shown in heavy line. Drag-alongside interaction may be done by click- and-drag interaction using a computer mouse, or by a similar device such as a stylus, or may be done by touch screen action, where user drags with their finger along the structure *ms* on screen. Drag vector $\vec{d}$ demarks a length dimension of structure ms, such as in projection. The drag operation may indeed be visualized on-screen of display device DD (as in Fig. 1A or similar), or there is no such display. On termination of the drag operation, a suitable area above or below or to the left or right of drag vector $\vec{d}$ is captured as subset b. For example, vector length may be expanded into a rectangular subset having the vector length as one of its sides, or at least a side having the length of vector $\vec{d}$ . Thus, the drag vector may subtend the set as shown in Fig. 1A, but this may not be so, as the drag operation may run on any side of the intended area. Whether the area to the left or right along drag vector is to be captured as subset b, can be configured or user controlled. An ML component of UI may be used to check which side has structure that better comports with the intended segmentation, and an appropriate decision is taken by the said UI's ML component. The extent of the subset away from the drag vector may again be pre-defined or is again ML decided based on image structure, or may be controlled ad-hoc by user. For example, two none -parallel drag vectors along two sides of the intended structure may be run, and the intersection of the respective areas away and perpendicular to the respective drag vectors may be used to define the subset b.

Whilst the above explanations of the user interaction in Fig. 1A were framed in terms of the said drag-alongside operation, this merely used herein for lucidity. Whilst indeed envisaged as such in embodiments, so are other embodiments to carry into practice the underlying principle of interaction. Thus, any other manner of interaction capable of indicating direction and length are also envisaged herein and the explanations herein around Fig. 1A are not confined to the said drag-along type interactions. As a refinement of the above drag-based operation, the drag vector could be expanded into a 2D shape. The shape may be curved, so is not constrained to lineally bounded shapes b. In addition, drag operation is not limited to a lineal vector. For example, drag operation alongside structure may allow tracing out at some arc length of a non-lineal curve. Thus, the curve may provide an indication of a shape, at least partly, if not fully, enclosing the structure, and the curve may be expanded into such an enclosing shape. A multi segment vector or curve may be defined by the user interface.

In addition, it will be understood that the proposed drag-long embodiment of (G)UI as per Fig. 1A is not necessarily tied to image processing system having the subset specifier SS as described above. The GUI of Fig. 1A and its variations discussed above in relation to Fig. 1A may be a standalone component that can be used with any interactive segmentation system, whether ML based or not, even without the subset specifier SS. Still, the Fig. 1A GUI may have particular performance benefits in combination with the subset specifier SS as proposed herein.

Interactions supported by computer graphics widgets are not necessarily required herein in all embodiments. For example, the subset specification may also be issued by user as verbal instructions, which are interpreted by a natural language ("NL") processing pipeline (such as an NL machine learning model) into a subset specification of the structure in the image m. Such natural language based sub-set specifications may be used in conjunction with the previously described geometrically driven user input methodologies, or instead of same. In addition or instead, the user interface UI for capturing and inputting the subset specification may be based on eye/gaze tracking technology. The user interface UI may include virtual reality (VR) headset, etc.

The input data preprocessor IDP facilitates the described interaction between the user via the user interface UI with the segmenter SEG. Specifically, the user may engage in one or more interaction cycles *j* with the segmenter SEG, via the user interface UI to elicit one or more segmentation computations by segmentor SEG, and this interaction is mediated and facilitated by the input data processer IDP. Broadly, the IDP is operable to ensure that the sub-set specification *b* corresponds in in-image size to the in-image size of an image structure *ms* expected for the clinical objective at hand. It has been found that if the sub-set specification *b* corresponds in size to the size of the image structure, fewer interaction cycles *j* with segmentor SEG are needed in order to achieve (eg, clinically) acceptable segmentation m'. Otherwise, if, for example, an area-wise too large or too small a subset-specification is input for consideration by segmenter SEG, more interaction cycles *j* may be required to arrive at the same segmentation result, as opposed when the subset corresponds in size to the structure *ms.* Thus, the proposed input data processer IDP facilitates the finding of clinically acceptable segmentations, whilst keeping the number of user interaction cycles low. Thus, the proposed input data preprocessor IDP (also referred to herein at times as "input date processor") helps combat user fatigue, an important consideration in particular in clinical settings.

In operation, the image processing system IPS receives the input image to be segmented. The input data processor IDP receives the input image *m* at its input IN and uses its sub-set specifier SS to output the estimated, appropriate, sub-set size specification *b* to the user input device UI. The user input device UI uses the proposed sub-set specification to help the user define the input image in respect of an image structure ms. The input image is forwarded together with the subset specification b to the segmenter SEG for segmentation. The subset specification *b* may be forwarded as a data item separate from the input image *m* to which it pertains, or the subset specification *b* is so forwarded as part of the input image as an overly, metadata, header data, as required, or in any other form. Forwarding as a separate data item and applying the two data items, the image and its subset specification b may have some benefits in processing by segmentor SEG. In either case, segmenter SEG co-processes image and its subset specification *b* to compute a first version mj of the segmented image including a first segmentation. It is this first segmentation image $m_j$ which may then be presented to the user via visualization on display DD for cross-checking. If not to standard, user may operate user interface UI again, to specify a new subset specification *bj,* but now in the segmented image having the first segmentation *m*j , thus entering a second cycle, where it is now the new subset specification $b_j$ (optionally again adapted by input data processor IDP), together with the current version of the segmentation *mj* that are then co-processed by the segmenter SEG to produce a next version *m(j+1)* of the segmentation image, and so forth through user-controlled iteration cycles, until a clinically acceptable segmentation result *m'* is achieved.

During the iterations, the input data processor IDP may or may not intervene with subsetadaptation, depending on whether the current subset as provided by user via UI is in size-wise correspondence. The actual size-computation by subset specifier SS may only need to be done once, in or before the first cycle. In the follow up cycles, the specifier may merely monitor for adherence to the computed subset size, and adapts the current user provided subset specification when needed before passing on for processing by segmentor SEG in the next cycle. However, a re-adaptation/new computation of size may still be done if required, as the size of the segmented structure may change whilst iterating during the cycles. Whether or not to re-compute may be based on monitoring the size of the segmentation by specifier SS, or such re-computation is done when user so requests. The monitoring may itself be done by ML, or may be rule-based, analytical, etc, as required. The user interface may include a suitably configured user functionality that allows to issue such as request for size-re-computation from user interface UI for input into data processor IDP. Thus, in this embodiment, an initial or current specification *b* by the user is intercepted by an event handler of input data processer IDP, and, then re-sized according to the sub-set specifier SS's analysis of the medical input image *m,* or of the currently segmented image *mj* produced by the segmenter SEG in the current cycle.

Thus, in a corrective operational mode of the specifier SS, the user provided specification may be re-sized, in particular may be enlarged or may be shrunk by a subset adaptor/resizer SA, as required. The resizer SA may so resize based on the sub-set specification b as computed by the specifier SS. The resizer SA may be part of the subset specifier SS, or may be arranged elsewhere in the processing pipeline, for example in the image input data processor IDP, or in indeed at the segmentor SEG at its input, etc. In addition to such changes in size, a re-positioning in the image plane/volume may also be done by the input data processing system IDP. On occasion it may also (or instead) be the geometrical shape that may be adapted, say, for example, from a circle to a polygon or other, as required. The subset specifier may in some instances change only the size as per a current specification b, but not location and/or shape, as required.

Instead to the above described corrective operational mode of input data processor, the input data processer IDP may in other embodiments be configured to merely suggest, upon computation by specifier SS, the correspondingly sized sub-set specification *b* to the user, such as by visualization on screen DD , preferably overlaid on the input image m, or on its current segmented version mj in the current cycle j. The user can then accept this potentially resized sub-set as compared to the sub-set initially specified by the user using user interface UI.

The input data processer IDP may operate before receiving any user input, and, based on its analysis of the current image, suggests beforehand a suitable sized sub-set specification. The user can then accept this specification, or indeed may choose to override the suggestion of the IDP if required.

Thus, as per the above described, the input data (pre-)processor IDP may have various operational modes: corrective or suggestive. The override functionality is not only envisaged in this suggestive operational mode, but may also be available in any other operational mode, such as the corrective mode. In addition, other modes relate to the timing of the operation of the specifier SS to compute the corresponding subset-size for use in segmentation. This timing may be said to be retrospective or prospective. The timing is retrospective, if specifier SS is operational after user issues via user interface UI the request to specify the subset in input image. The timing may be prospective, if specifier SS is operational before (any) such user request comes in. Indeed, subset specifier SS may compute subset-size once image is acquired by imager IA, or, once acquired image *m* is stored, before any review session. The so computed subset size *b* may then be associated with some or each such future input image(s) m. For example, the computed subset-size for use with interactive segmenter SEG may be written out as metadata, may be written in the image file's header, or may be stored in any other way that later, when review of image m is done, can be associated with the image m, and applied as per the above, in either mode, corrective or suggestive mode.

In some embodiments, but not all, the sub-set specification *b* computed by specifier SS may be the smallest (in arealvolume size) geometrical figure of a given type, that still includes (that is, covers) the structure *ms* of interest (in the initial image or as per the current segmentation in the given segmentation cycle).

It is not necessary herein for the subset specification determined by subset specifier SS to define a subset that includes/covers the structure of interest sm. Thus, there may or not be an area of intersection between the subsets as per the determined subset specification, and image structure *ms.* In some embodiments, the subset specifier SS may also consider, in addition to the image data m, contextual data that is indicative of the clinical purpose of the imaging or segmentation. This other context data may be taken from patient files, protocol data, metadata, etc.

It is envisaged herein that the sub-set specifier SS is in itself driven by a suitably trained machine learning model M', which may be different from the machine learning model M" that is driving the segmenter SEG. However, in other embodiments there is a unified model M which includes both functionalities, that is, the user input adaptation as per the specifier SS, and the segmentation via segmenter SEG. Thus, in embodiments, there a single such machine learning model M that was trained to implement both, user input adaption and segmentation.

Performance of the segmenter SEG in cooperation with the input data preprocessor IDP may be described by a certain metric $q$, such as number of clicks, or more generally the "*number of interactions*" ("NOC"), in relation to the segmentation performance. For example, the number of interactions may be related to the correspondence of the segmentations produced by SEG with a test/validation set of ground truth segmentations. The said correspondence may be measured by the said metric or score $q$. Metrics using concepts from discrete set theory, such as the Dice co-efficient or other, may be used to measure the set theoretic in-image overlap between the segmentation result produced, and certain ground truth segmentations included in the test data. For example, a metric $q$ may be defined based on NOC's at score level $q$ ("NOC@x"). Using such or similar performance metrics, it has been found that the proposed interactive machine learning system including the user input adaptation-to-size in combination with segmenter SEG may achieve better score within a certain number of NOC's, than other, in particular other interactive type image segmentation systems. Non-interactive system were also outperformed at times, sometimes with NOC =1, in particularly for segmentation tasks of abdominal structures, such as around the pancreatic, PD, liver regions, in particular still with segmentation for related cancer lesions. Specifically, and surprisingly, the proposed approach achieved for PD or pancreatic cancer vs normal tissue segmentations a satisfactory score at merely a single interaction. In most cases around the pancreatic related segmentations, the NOC was less than 3 or 4 for a given $q$ score level. At times, the proposed approach, based on the tandem of input data processor IDP and segmentor SEG, outdid other interactive ML segmentation-systems by a margin of up to-30% in terms of segmentation performance.

Instead of subset specifier SS providing the adapted/computed subset size specification b to the input user interface first, this can be forwarded instead or in addition to the segmentor SEG direct, without detour via UI, as required.

Reference is now made Fig. 2, which shows a block diagram of a machine learning model M" that may be used by the segmenter SEG. A similar or a different ML model M' may be used to implement the subset specifier SS of input data processer IDP, or indeed such model M may be use for an integrated system that implements both, segmentor SEG and input data processor IDP.

Broadly, and turning first to the segmentor SEG's ML implementation, the machine learning model M" for segmentor (or for the integrated model M) co-processes the current sub-set specification b as adapted by input data processor IDP from user input, and the current input image $m$, $mj$ (which may be initial image or a current segmented image as provided by the segmenter from a previous cycle or the initial input image), to produce the segmented image m',mj+1 with its segmentation s, sj.

Owing to the spatially correlated structure of the imagery to be processed, a neural network type NN model have been found to be of particular benefit herein. Yet more particularly, convolutional type neural networks CNN models have been found to yield good results. However, other ML models such as those using attention mechanisms may also be used with benefit herein.

In some such NN model types as mainly envisaged herein, processing is arranged in various layers $Lj$, with input received at the input layer *IL.* Input layer responds with intermediate data output which is passed through the intermediate layers $Lj$, to yield further inter-hidden-layer intermediate output data, referred to as feature maps FM, that are then combined suitably by the output layer OL into a structure that has the same size as the input image. Feature maps are spatial data that may be represented just like the input image as a matrix or tensor, so each feature map may be said to have size and resolution. A deep architecture may be preferred herein, which means there are usually at least one hidden layer, although their number is sometimes in 10s or 100s or even more. Feedforward models may be used, but NNs of the recursive types are not included, in which case the "depth" of the model is measured by the number of hidden layers times the number of passes. In other words, a recursive model with fewer layers than another such model, may be still be said to have a deeper architecture, if there are a sufficient number of passes of recurrent processing, where feedback data is passed from downstream layer, back to upstream layer.

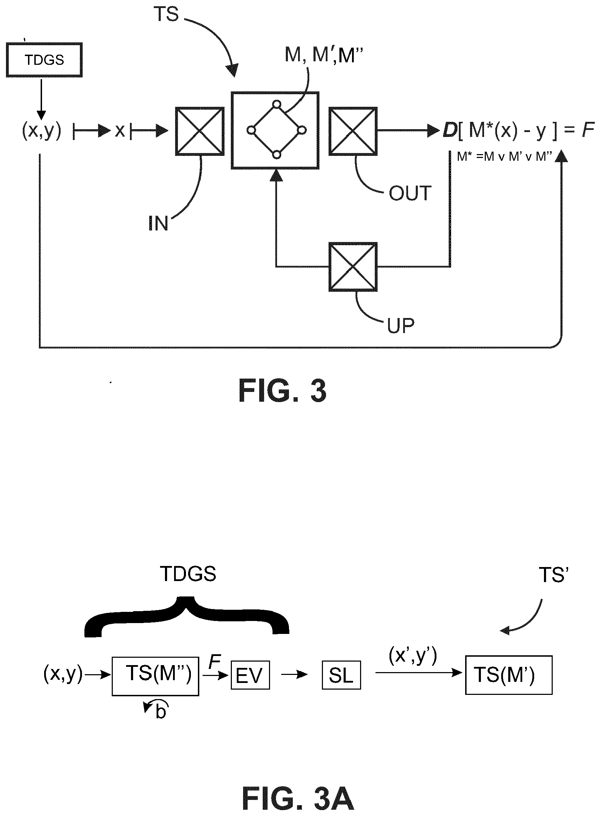

Representation, storing and processing of the feature maps FM and input/output data at input layer/output layer as matrices/ tensors affords accelerated processing. Many operations within the model can be implemented as matrix or dot-product multiplications. Thus, using matrix/tensor data representation allows some degree of parallel processing according to the single instruction multiple data ("SIMD") processing paradigm. Responsive throughput rates in training and deployment can be achieved using computing platforms with CPUs of multi-core design, such as GPUs, or other computing arrangements that accommodate parallel computing. It is in particular the input data processor IDP and/or the segmentor SEG, and/or indeed the training system TS (see Fig. 3 below) which may be run with benefit on computing platforms PU with such multi-core CPUs, GPUs, etc. SIMD processing may help achieve efficiency gains in particular on the training system TS during training.

Preferably, some or all of the layers IL, Lj, OL are convolutional layers, that is, include one or more convolutional filters CV which process an input feature map FM from an earlier layer into intermediate output, sometimes referred to as logits. An optional bias term may be applied by addition for example. An activation operator of given layer processes in a non-linear manner the logits into a next generation feature map which is then output and passed as input to the next layer, and so forth. The activation operator may be implemented as a rectified linear unit ("RELU"), or as a *soft-max*-function, a sigmoid-function, *tanh*-function or any other suitable non-linear function. Optionally, there may be other functional layers such as pooling layers P or drop-out layers to foster more robust learning. The pooling layers P reduce dimension of output whilst drop-out layer sever connections between node from different layers.

One particular type of machine learning model of the CNN type envisaged herein are those where one representation of the input image m,mj has its resolution maintained while it is propagated as features maps through the various layers and is ultimately combined at the output layer into the final segmented image *m* or into the intermediate output *mj.* This feature of the model, which may be referred to herein as "resolution preserving" is illustrated in Fig. 2 as the left to right arrow rendered in heavy dashed line. The dashed arrow represents a processing strand with feature maps FM of maintained resolution, terminating in output layer OL, where full-resolution data is combined with other features maps to output segmented image m'.

Being resolution preserving as envisaged herein for some models M" for segmentor SEG, is in distinction to certain other models such as of the encoder-decoder NN type, which have a bottleneck structure. In such bottleneck structure models, the resolution of the data is changed by using a sequence of convolutional operators, followed by a sequence of deconvolution operators for example. The convolution operators with stride >1 are used to first down-transform the input image m,mj into a lower dim representation/resolution, called the latent representation or "code". The code has then its resolution up-transformed/increased by sequential operation of a sequence deconvolutional operators, to output at output layer output data with a resolution that matches that of the input image. However, this down- and up- transformation of resolution have been found to yield inferior results in interactive segmentation networks proposed herein, in particular for abdominal structures/cancer vs non-cancer differentiation. Instead, the model M" for segmentor SEG is configured to provide at least one strand (illustrated as the said dashed arrow) of feature map representations propagating through the model that maintain the resolution of input image m, mj throughout processing until it is feed into the output layer OL. This preferred feature of resolution preservation does not exclude the model to have other strands of processing by convolutional/deconvolutional operators (or by any other means) where such down- and up-transformations is indeed envisaged. However, there should be preferably, and in some embodiments, at least one such strand that is resolution preserving. Resolution preservation can be done by using a series of convolutional operators, each having stride 1. However, in principle, the ML setup and model choice/configuration of segmentor SEG model M" can be of any of the types and kind described in the literature, as long as its layers are configured for multi-channel processing to accept input data in input layer IL of the form (*b* [or bj], *m* [or mj]), as the (possibly adapted) subset specification *b* is co-processed with the image data m,mi. See for example Jingding Wang et al in their paper "Deep High-Resolution Representation Learning for Visual Recognition", in IEEE TRANSACTIONS ON PATTERN ANALYSIS AND MACHINE INTELLIGENCE, MARCH 2020, available online at arXiv:1908.07919v2.

The sub-set specification b,bj (optionally adapted by the subset specifier SS) that is co-processed with the imagery m.mj by the model M" of segmenter SEG may be understood as contextual data. The sub-set specification b,bj may be treated itself like an image, with the same size as input image, with image elements that fall within the subset flagged up according. Thus, sub-set specification b,bj may be implemented as a map or mask. Such a map/mask (also referred to herein as the (subset) specification map/mask) may be merged during propagation through the layers with the image data. For example, the subset-specification mask *b* having the same size (eg, *a x b* pixels/voxels) as the image *m* to which it pertains, may be combined into a (*2 x a x b*) tensor. Merging, as one form or co-pressing, may be achieved by applying convolution filters CV to the tensor, preferably with depth at least 2 to effect cross-channel convolution. Use of the sub-set specification b,bj as contextual data may be conceptualized as data-driven regularization in deployment. Regularization may guide the deployment/inference process to settle for a realistic estimate for the segmentation. The parameter landscape in which the model M" was trained is usually of very high dimension and can have a complex structure. Such complex parameter landscape may result in the trained model M' being ill-conditioned, with a large condition number, thus being sensitive to even minute fluctuations on input. Using the user input b,bj as contextual data during training allows for a more balanced learning (on which more below at Fig. 3). And providing the user specified input b,bj together with the input image m,mj during deployment after training, allows for more robust operation of segmenter SEG.

Turning now to the ML model M' that drives operation of the input data processer IDP, much that has been explained above is also of application in relation to this model M'. Thus, M' may have a similar architecture as model M", in particular may also be of the convolutional NN type. M' may also be configured as resolution preserving as explained above. Its layers must be configured to accept as input the input image m.mj and the layers operate together with the output layer OL to combine the feature maps into a representation of the suitably sized sub-set specification b,bj as output. Thus mode M' processes medical image data m,mj as input and outputs at its output layer OL a recommended size specification such as diameter of a circle or ball, as required, or indeed output a mask/map representing the possibly resized subset specification. In addition, an indication of the location of the center of circle/ball may be provided, such as is done in mask/map presentation. Thus, in preferred embodiments, representation of output of model M' may be in form of such a mask or as map, preferably of same size as the input image. The mask may be a binary mask or a fuzzy mask with probability values indicating per image element subset membership. Gaussian or other suitably parameterizable probability density functions may be used instead to indicate probability of membership of image elements (voxel/pixel) in the possibly resized subset.

As such, the two models M', M" have different ambits and objectives. This can be understood as follows: Segmentation SEG model M" is trained to learn the latent relationship between imagery *m* and their segmentation *s.* This may be called the "image vs segmentation relationship" (II). subset specifier SS's model M' on the other hand is trained to learn the latent relationship between imagery m and its suitable subset specification *b* for subsequent segmentation. This may be called herein the "image vs subset size relationship" (I). Both relationships can be expected to be highly complex, not easily (if at all) explicitly modellable by analytical methods using closed/known functional expressions that are feasible to evaluate. Machine learning does not rely on such explicit analytical modelling, but instead learns pattens in extant or ad-hoc generated training data. Instead of analytical modeling, a generic machine learning model *M.M',M"* architecture may be used instead. Based on training data, as may be found in medical databases, the respective relationship (I)(II) is implicitly modelled by adjusting certain parameters of the machine learning model M',M", M, based on the training set in a training phase. Once sufficiently trained (as may be determined by tests), the trained model M',M" can then be deployed into medical practice as described above to estimate the subsets and the segmentation, respectively. However, analytical modelling is not excluded herein and may well be used in some, in particular non-ML type, embodiments. In addition, LUT-based embodiments as mentioned above, or any other are not excluded herein for implementation of the subset specifier SS.

Reference is now made to Fig. 3 through which shows a block diagram of a training system TS as may be envisaged herein in embodiments for training either one of models M',M", or the common model M, as described above. In Fig. 3, (*x,y*) represents training data with, *x* being training data input, and *y* is related ground truth or target. The training data (*x,y*) differs, depending on whether M' or M" is trained as will be explained in more detail below.

Data item x may be historic medical image data as retrieved from medical data bases and *y* may be based on annotations as provided by human expert. At least some of the training data may be simulated by a training data generator system TDGS in some embodiments. The training systems TS and the training data generator TDGS may be implemented on the same, or on different computing platforms. The platforms have preferably multicore chipsets for better throughput, in particular when it comes to implementation of training system TS.

Turning now in more detail to training aspects, in some cases, when training either one of models M',M", M, operation of training system TS may be controlled/driven by a cost function *F*, as illustrated in Fig. 3.

In general, two processing phases may thus be defined in relation to the machine learning models generally: a training phase and a later deployment (or inference) phase.

In training phase, prior to deployment phase, the model is trained by adapting its parameters based on the training data. Once trained, the model may be used in deployment phase to compute the alternative findings, if any. The training may be a one-off operation, or may be repeated once new training data become available.

In the training phase, an architecture of a machine learning model M',M", M, such as shown of the NN type in Fig. 2, may be pre-populated with initial set of weights. The weights $\theta$ of the model M',M",M represent a parameterization $M'^\theta$, (same for M', and M) and it is the object of the training system TS to optimize and hence adapt the parameters $\theta$ based on the training data (*x*,y) pairs. In other words, the learning can be formulized mathematically as an optimization scheme where a cost function *F* is minimized although the dual formulation of maximizing a utility function may be used instead.

Training is the process of adapting parameters of the model based on the training data. An explicit model is not necessarily required as in some examples it is the training data itself that constitutes the mode, such as in clustering techniques or k-nearest neighbors. Etc. In explicit modelling, such as in NN-based approaches and many others, the model may include as system of model functions/computational nodes, with their input and/or output it least partially interconnected. The model functions or nodes are associated with parameters θ which are adapted in training. The model functions may include the convolution operators and/or weights of the non-linear units such as a RELU, mentioned above at Fig. 3 in connection with NN-type models. In the NN-case, the parameters θ may include the weights of convolution kernels of operators CV and/or of the non-linear units. The parameterized model may be formally written as $M^\theta$ (same of M", M). The parameter adaptation may be implemented by a numerical optimization procedure. The optimization may be iterative. The objective function *F* may be used to guide or control the optimization procedure. The parameters are adapted or updated so that the objective function is improved. The input training data x is applied to the model. The model responds to produce training data output. The objective function is mapping from parameters space into a set of numbers. The objective function $F$ measures a combined deviation between the training data outputs, and the respective targets. Parameters are iteratively adjusted to that the combined deviation decreases until a user or designer pre-set stopping condition is satisfied. The objective function may use a distance measure $D[.,.]$ to quantify the deviation.

In some embodiments, but not all, the combined deviation may be implemented as a sum over some or all residues based on the training data instances/pairs, and the optimization problem in terms of the objective function may be formulated as:

$$argmin_\theta F = \sum_k D\left[M^\theta(x_k), y_k\right] \qquad (1)$$

In the setup (1), the optimization is formulated as a minimization of a cost function $F$, but is not limiting herein, as the dual formulation of maximizing a utility function may be used instead. Summation is over training data instances $i$.

The specifier model M' may be formulated as classifier model or a regression model.

The cost function $F$ may be pixel/voxel-based, such as the $L1$ - or the smoothed $L1$-norm, $L2$-norm, Hubert, or the Soft Margin cost function, etc. For example, in least squares or similar approaches, the (squared) Euclidean-distance-type cost function in (1) may be used for regression task. When configuring the model as a classifier, the summation in (1) is formulated instead as one of crossentropy or Negative Log Likelihood (NLL) divergence or similar. Formulations as generative models are not excluded herein, and neither are other, including hybrids.

Updater UP of system TS updates model parameters, based on function F. The exact operation or functional composition of updater UP depends on the optimization procedure implemented. For example, an optimization scheme such as backward/forward propagation or other gradient based methods may then be used to adapt the parameters $\theta$ of the model M so as to decrease the combined residue for all or a subset of training pairs from the full training data set. Such subsets are sometime referred to as batches, and the optimization may proceed batchwise until all of the training data set is exhausted, or until a predefined number of training data instances have been processed.

Training of segmentor model M"

When training segmentor model M", x may represent again some input image as training input, and its target y is a ground truth segmentation. Training input x may be obtained as from historical image stock as may be found in medical databases, PACS, etc. However, as model M" is trained for interactive segmentation, the training data input is contextualized, and has thus the form x=(m, b), which includes the image m to be segmented, but also in association with the image, a related subset specification b. For training, the ground truth segmentation y and the context data b may be provided by human expert reviewing historical imagery as may be accessible in medical databases. Alternatively, and preferably, the contextual subset-data b for the training input data x=(m,b) may be generated, for example by simulation d, and fed into the training system TS.

For example, one such pipeline TS for training of an interactive segmentation model where contextual data such as the user provided subset specification b, is admitted for co-processing may proceed as follow. The subset specifications for training may be simulated, at least for the first cycle to initiate pipeline TS. The simulations preferably include "positives" and "negatives" for more robust training with good generalization. For example, a subset specification of the positive type is one where the specified subset at least partly includes (overlap) foreground/structure. For example, the subset may overlap with at last some part of the structure, for example with the structure's barycenter. A subset specification of the negative type includes background, or only background. Simulation may include randomized sampling to initialize a subset specification processing channel/strand in the training system TS. A training input image (such as a 2D CT image slice), a current subset specification (which may initially be empty), and an (initially) empty segmentation mask are combined channel-wise and given as input to the segmentor model M" for co-processing, such by cross-channel convolution, or other. The segmentation model M" then predicts a segmentation mask based on the provided input. Various statistical subset-specification sampling strategies may be used to avoid bias, such as described by S. Mahadevan et al in "Iteratively trained interactive segmentation", arXiv preprint arXiv: 1805.04398, 2018. In the first iteration cycle, specification may b0 may initially be empty.

For some or each training data batch during training, a maximum number of iterations may be randomly chosen for an inner loop for model parameter adaptation. The parameter adaptation may be driven by the objective function $F$. In some or each iteration, the predicted segmentation mask may preferably be used to sample for another subset specification for the next cycle, and so on. This feedbacksampling with the predicted segmentation mask from a current cycle is advantageous, as this allows improving the training performance. The predicted mask is combined, such as by concatenation along one spatial dimension, with the input image, and a new subset specification ais simulated, and the so combined data is fed into the same model, and so on. For each anatomical structure or medical objective purpose, a separate model M" may be trained, though this is not necessarily required. Thus, in some embodiments, model M" may in fact be a bank of models M" = M"$^a$, one or more for each anatomy/tissue, etc. "a", or medical purpose.

It is proposed herein in some embodiments that localized training of segmenter model M" may be a more viable approach and provides better results than seeking optimization across the whole image. What is proposed herein is a cost function F with weights, that vary with proximity to a current image edge when it emerges in the segmentation of a given training input image during optimization when seeking to improve the cost function. Specifically, F is configured to attach more weight to image elements that are spatially closer to an in-image gradient edge (that may represent an interface between tissue types), as opposed to image elements that are more distal to such a (current) edge. The course and/or pronouncedness of the edge may change during iteration for the given input image, so the function F's weights will need to be reassigned dynamically and accordingly during the iteration. For example, F may include a modulator or weight term d: $F = d(v)*F$, with $d(vp)>d(vd)$, with proximal voxels vp closer to an edge than distal voxel vd, thus edge-proximal voxel vp will incur higher costs in the training process than distal voxel vd. Depending on implementation, weight term d may assign lesser weight to voxels, the closer they are to the interface/structure in the training output imagery M'(x).

This edge-dependent localization of cost function F allows focusing the learning on tissue interface structures as these are of particular importance for accurate and relevant segmentation. Such tissue interface edges are of consideration especially for resectability assessments in oncological applications, as mentioned earlier in relation to index r. The exact location and course of the actual interface is of course not known, but edges representative of such interface appear as structures in intermediate results mj as computed by the system TS (or indeed obtained elsewhere, by some other process/model) during learning of model M" parameters. The model parameters are adapted based on a deviation of M"(x) from its target y. As more weight is given to voxels or pixels that are closer to a currently defined image edge (interface) as per example, the learning system TS configures the model M" so as to become more focused on such edge structures.

The above described localization of cost function F is optional. Also, other than for accounting for the contextualized form of the training data input data $x=(m, b)$, any existing segmentor machine learning model and training thereof may be used herein.

Training of specifier model M'

When training specifier SS model M', x refers to some input image, whilst y is the appropriate subset specification (that preferably indicates at least the appropriate subset size) to use when one wishes to segment the input image interactively with segmentor model M". As mentioned earlier, in this case y may be represented as a mask, binary or fuzzy, to represent/specify suitably sized sub-set b.

As envisaged herein, training system TS is based training data, at least partly provided by a training data generator system, although any suitable training system TS, with or without training data generator TDGS, may be envisaged herein, including those that rely on human export annotation. However, in some preferred embodiments, and as illustrated in Fig. 3A, the training is based on computer-implemented training data generator TDGS as will be now explained in more detail. Specifically, and as envisaged in some embodiments, training data generation for subset specifier model M' (the learns the m vs b relationship) may be "piggybacked" on the training for the segmentor model M" (that learns the relationship m vs s). Broadly, this can be done by varying simulated context data b (the subset specification data) in the training scheme of model M". In this manner, certain subset specifications can be associated with the relevant training input image m to so build up a stock of image vs subset specification pairs (x',y'). This training data (x',y') may then be fed into a new standalone training, now dedicated to the training the model M' to learn the relationship m vs b, based on the pairs (x',y), which relationship is of main interest herein. This approach is advantageous as there is a windfall effect: not only is the training data for training of specifier model M' provided, but at the same time the segmentor model M" is trained.

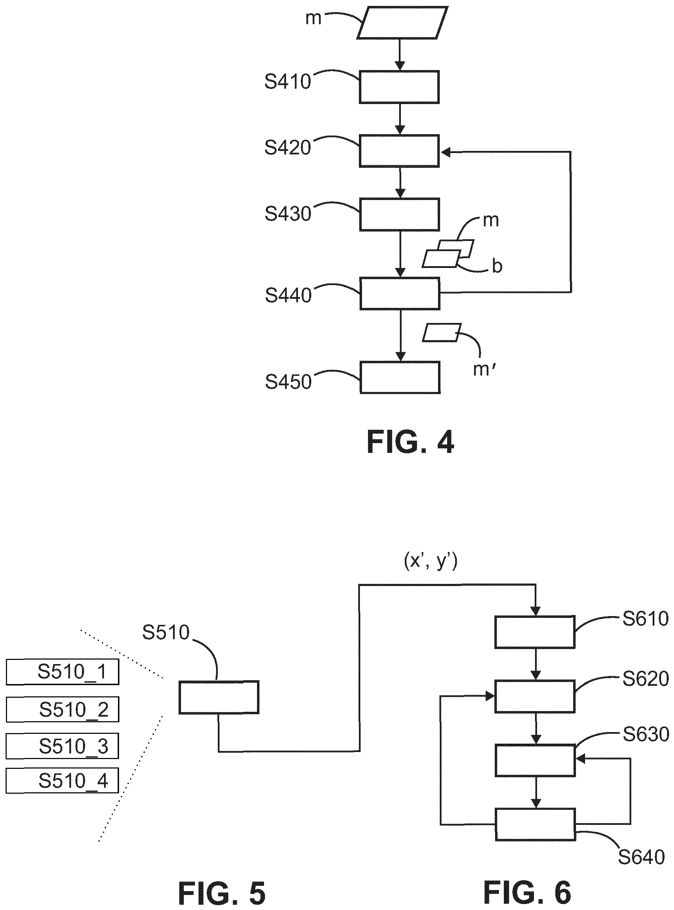

Specifically, training of specifier model M' may be achieved by first generating, eg my simulation, subset specifications, and these are then varied in size bk (k indicates size). The step for training segmentor model M" as described may be used for this, although in principle the simulation and/or size variation may also be done manually by a human participant. For each bk, and a given training input image m, segmentor model M" is trained for target y=s. The cost function F is evaluated by an evaluator EV. Any given training input image m is then associated by a selector SL with the respective bk* that yielded the lowest cost among the bk's considered for the given training input image x= m. In this manner, an association or mapping into the said training pairs (x'y') can be generated (see step S510, Fig. 5 below). Thus, each m is associated with its "best" bk as target to obtain a pair j (x' =mj, y'=bk*j). The same is repeated for some or each training data input image m when training M", to so build up, in the training of model M", a stock of training data pairs (x',y') to train specifier model M'. For example, an initial specification may be associated with m first as generated by the simulation/sampling as described above in training of model M". The so simulated initial specification may then be deterministically varied in size, such as by shrinking or magnification. Alternatively, each bk considered for a given training input image m is simulated afresh. Once a large enough stock of training data has accumulated, the new model M' may be used which is then trained in a new separate training run (now unrelated to the training of model M") on the set of pairs (x' =mj, y'=bk*,j). Thus, specifier model M' is trained to predict, for a given image, its associated subset specification bk having the best size for subsequent segmentation with model M", once the latter's training concluded. The same model as used for segmentor model M" may be used as model M' for specifier SS such as for transfer-training for example. Alternatively, a new model M" is set up, with newly initialized parameters, and this then trained on generated training data pair (x',y'). The latter approach may be more beneficial, as the image vs subset relationship, *m vs b,* which model M' is to be trained for may have different character than the segmentation relationship *m vs s*, which the segmentor model M" is trained to estimate. As explained earlier, the subset specifications used herein may be simulated /randomized. The above-described coordination of training data generation in the training of segmentor model M" is done by training data generator system TDGS.

As mentioned in connection with training of segmentor model M", it is preferable in training of the subset specifier SS model M' to ensure that the simulation/randomization is so configured, that there are subset specifications of the positive and negative type provided, for example in relation to one or more image structure of interest for a current medical task for which the model M' is to be trained. This allows boosting performance. It may also be preferred herein to use, as explained above, the training output segmentations as feedback data over the training cycles, to sample the current subset specification for the next cycle.

The above described edge-dependent localization of cost function *F* in relation to model M", may also be considered when training specifier model M'.

The two processes of i) generating training data for training specifier model M' by generator TDGS, and the training of the segmentor model M" by system TS may be done in sequence, one after the other. Preferably however, both are done in combination, such as by interleaving or in parallel. However, combining the two processes i),ii) as by interleaving or other, is preferred herein for better processing efficiency.

It will be understood that the training setup in Fig. 3, 3A is merely one example herein. Any other ML training setup for training subset specifier model M' may be used herein instead.

Reference is now made to Figs 4-6, which shows respective flow charts that explain the operation of the above described system IPS and training system/training data generation. However, it will be understood that the below flow charts are not necessarily tied to the above described systems, but may also be understood instead as respective teachings in their own right.

Broadly, Fig. 4 explains a flow chart of a computer-implemented method of a user interactive segmentation operation, using user input adaptation as described above in connection with operation of the specifier SS, and the segmentor SEG, post training. Fig. 5 relates to generation of training data for use in training specifier SS model M', whilst Fig. 6 shows a flow chart of a method of training in particular model M' or the integrated model M, given the training data.

Referring now to Fig. 4 first, this assumes the system has been trained beforehand, if indeed implement in ML. Again, whilst ML is preferred herein, other analytical setups are not excluded herein.

At step S410 an input image to be segmented is received.

At step S420, preferably using the trained subset specifier machine learning model M', a sub-set specification for a subset in the input image is determined. This subset specification may be based on additional input from a user, including an earlier sub-set specification from an earlier segmentation cycle, or a user provided subset specification. Thus, the determination of the subset specification at step S420 may be based on image information in or around the subset in the image to which the earlier sub-set specification pertains, and or may including considering the whole image, and the image information in and around the subset specified. The earlier sub-set specification may be adapted in step S420 based in the newly determined subset-specification. If use in an iterative segmentation is intended, as indeed envisaged herein, an initial sub-set specification may be determined based on the image information (possibly with context data) only, without such earlier sub-set specification. The determined subset-specification, and indeed the earlier one, may relate preferably to an in-image size of the subset, but may also relate to subset location and/or subset shape.

At step S430 the sub-set specification so determined is output and used by a preferably machine learning based segmentation algorithm to compute, based, on the sub-set specification b, and the input image *m,* a segmented image m', including a segmentation result s which may then be output at step S440 for further processing.

The further processing step S450 may include any one of storing, displaying/visualizing, or using it for control operation of medical equipment, etc.

In embodiments, at step S450 include computing the above mentioned resectability index, based on the segmentation s of the segmented image m'.

The further processing may include feeding back to step S420, where a new sub-set specification may be determined, based on the segmentation s as now presented in segmented image *m',* with new user input (a new user provided subset specification *bj),* received in relation to the current segmentation *m', mj,* and so on, in one or more segmentation cycles. Thus, the segmentation step S430, facilitated by sub-set user input adaptation at step S420, may be operable in one or more iterations as indicated by the feedback arrow in Fig. 4. That is, the segmentation output at step S440 is not necessarily the final result, but may merely e an intermediate result *sj*. This intermediate result *sj* may still be displayed for example, to allow validation by user. If found subpar, the current segmentation is sent back to step S420, where new user input *bj* in respect to this new (current) segmentation *sj* is obtained and then optionally adapted as described above, which is then again passed forward for a new cycle of segmentation, etc.

Turning now to Figs 5,6, these flows charts relate to training aspects of specifier model M' in particular. The training of segmentor model M" is not considered in detail herein, as any existing training method/system may be used as described above, so long as the segmentor training scheme allows processing of contextualized training input x=(m. b), as described earlier. Whilst the two training setups of models *M',M"* are different, they may be cross-relations as explained above at Figs 3,3A where training data generation, in particular for training of the subset-specifier model M', is integrated onto the training of segmentor model M".

Reference is now made to Fig. 5, which shows computer-assisted training data generation for use in training, in particular of the machine learning model M' for use in input adaptation by specifier SS, in connection with interactive segmentation of imagery, such as in Fig. 4. Such user input may include clicks or other user interactions where a sub-set is specified in an input image that is latter to be segmented.

Whilst the model M' may be trained by using a human participant/expert, this may be cumbersome. Thus, in a preferred embodiment shown in step S510, the various sub-set specifications b during training of segmentor model M' are generated based on simulation, for example by random sampling as explained above. The training data generator step is preferably used in the context of training segmentor model M", which is, as such, a separate process. And yet, surprisingly, interrelating the two processes have been found to yield good results for the training of model M' for subset specification. It is preferable to so relate the training data set generation of model M" with the training of Model M", with which specifier model M' is to cooperate post training.

The sub-set specifications bk* so generated at step S510 in association with the imagery m may be supplied as training data for training the specifier model *M'*. The underlying imagery *m* may be obtained as historic imagery from image databases. The training imagery x'=m used in training for specifier model M' may differ from the imagery used when training segmentor model M".

Specifically, in embodiments, step S5 10 of generating the training data set for specifier model M' may be integrated in the training context of segmentor mode M". The training data step S510 may thus include:

in step S510_1 an input training image x'=(m,b) is received, including subset specification b as context data. The subset specification b may in particular relate to an in-image size of the subset in the training input image m.

In step S510_2, a segmentation model M" is trained based on the input training image, the training including varying the specification b of the subset in the training input image over plural specifications of the subset to obtain different training results.

In step S510_3 the training results are evaluated, based on a segmentation quality indicator, such as a quality indicator. The objective function *F* (such as cost or utility function or other quality indicator) may be used.

based on the evaluating, at step S510_4, the input image is provided, associated with one *bk** of the plural subset specifications *bk*, as a training data item for training the/a further machine learning model M' for subset specification adaptation. The learning model M' may be different from the one M" used to train for the segmentation. The associated with one *bk** of the plural subset specifications may be one that attracted the best (or good enough as per a threshold) quality indicator value, or at least a quality indictor value above a certain preset quality threshold.

The steps S510_1 through S510_4 may be repeated over multiple training input images m, to so obtain a set of training data items (x',y'), as described above at Figs 3. 3A.

The so obtained training data (*x',y'*) as per Fig. 5, or obtained by other means, eg, by human expert assistance (annotation), may then be processed by a training method such as described in the flowchart of Fig. 6, to which reference is now made, to train model M'.

At step S610, training data is received in the form of pairs (*x',y'*). Each pair includes the training input *x*=m and the associated target subset specification y' =bk*, as defined above at Fig. 3. At step S620, the training input *x'* is applied to an initialized machine learning model M' to produce a training output M'(x').

A deviation, or residue, of the training output from the associated target *y'* is quantified at S630 by cost function *F.* One or more parameters of the model are adapted at step S640 in one or more iterations in an inner loop to improve the cost function. For instance, the model parameters are adapted to decrease residues as measured by the cost function. The parameters include in particular weights of the convolutional operators, in case a convolutional model M' is used which is indeed envisaged in embodiments.

The training method then returns in an outer loop to step S610 where the next pair of training data is fed in. In step S620, the parameters of the model are adapted so that the aggregated residues of all pairs considered are decreased, in particular minimized. The cost function quantifies the aggregated residues. Forward- backward propagation or similar gradient-based techniques may be used in the inner loop. Instead of looping over individual data training items, such looping may be done instead over sets of training data items ("batches"), one which more below.

Examples for gradient-based optimizations may include gradient descent, stochastic gradient. conjugate gradients, Maximum likelihood methods, EM-maximization, Gauss-Newton, and others. Approaches other than gradient-based ones are also envisaged, such as Nelder-Mead, Bayesian optimization, simulated annealing, genetic algorithms, Monte-Carlo methods, and others still.

More generally, the parameters of the model M' are adjusted to improve objective function $F$ which is either a cost function or a utility function. In embodiments, the cost function is configured to the measure the aggregated residues. In embodiments the aggregation of residues is implemented by summation over all or some residues for all pairs considered. In particular, in preferred embodiments the outer summation proceeds in batches (subset of training instances), whose summed residues are considered all at once when adjusting the parameters in the inner loop. the outer loop then proceeds to the next batch and so for until the requisite number of training data instances have been processed. Instead of processing pair by pair, the outer loop access plural pair of training data items at once and looping is batchwise. The summation over index "$k$" in eq (1) above may thus extend batchwise over the whole respective batch. The cost function used in Fig. 6 may be the same, or may be different from the cost function used in Fig. 5 for quality assessment. The cost function used in Figs 5,6 may be localized in respect of edges as explained above.

Although in the above main reference has been made to NNs models, the principles disclosed herein are not confined to NNs. For example, instead of using the NN for pre-processor PP, another approach such as Hidden Markov Models (HMM), or Sequential Dynamical Systems (SDS), among which especially Cellular Automata (CA) may be used.

Other models envisage herein include Support Vector Machines (SVM), or boosted decision trees may be used. Other models include generative models, such as GAN, or Transformer type models.

As mentioned earlier at Fig. 3A, the two processes as per Figs 5,6 may be interleaved for better efficiency, so that both, the generating of training data and the training of specifier model M' may be done quasi-simultaneously/in parallel, for better efficiency, as required.

Whilst the above has been explained largely with reference to supervised learning, this is not a necessity herein, as unsupervised learning approaches as not excluded herein. The model M' may usefully be implemented as generative ML type models. Any such model types and suitably configured training systems may be envisaged herein. The training data generator system TDGS may be part of (integrated) into the training system TS.

As earlier mentioned, the model M' may be trained to learn not only to determine subset size, but also any one or more of (in-image) location and/or shape of subset as part of the subset specification. In any one of these cases, the training data generator system TDGS may be configured to not only varies subset size, but in addition also location and/or shape. The shape variations may be taken from a set of a predefined shape type (eg bbox, circular, etc), or the subset shape may be varied without restriction to a pre-defined shape type. Generative ML models may be used in the training data generator system TDGS to suggest new shapes during the learning. Such generative type ML models may be used in the training data generator system TDGS to discover new shapes that my improve cost function. When using image masks/map as representation of the subset specification with size/resolution (eg rows and column) equal to that of the input image, the specifier SS will learn to output its determined subset specification in the said mask/map format, thus automatically determining not only size, but also in-image location and shape.

In the above, the same notions $m,b,s$, etc (and related notation, such as $mj, bj,$ etc) was used for training data and data encountered in deployment/inference. But this is purely for sake of simplicity and to disencumber notation. Training data and data encountered during deployment/inference are different. And the notions used herein $m,b,s,$ etc, are referring to concepts rather than individual data items. Thus, the use of the same notation herein for training data and deployment data does not imply that the data is equal, as they are not.

The components of the system IPS may be implemented as one or more software modules, run on one or more general-purpose processing units PU such as a workstation associated with the imager IA, or on a server computer associated with a group of imagers.

Alternatively, some or all components of the system IPS may be arranged in hardware such as a suitably programmed microcontroller or microprocessor, such an FPGA (field-programmable-gate-array) or as a hardwired IC chip, an application specific integrated circuitry (ASIC), integrated into the imaging system IA. In a further embodiment still, the system IPS may be implemented in both, partly in software and partly in hardware.

The different components of the system IPS may be implemented on a single data processing unit PU. Alternatively, some or more components are implemented on different processing units PU, possibly remotely arranged in a distributed architecture and connectable in a suitable communication network such as in a cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solidstate medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope. Such reference signs may be comprised of numbers, of letters or of any alphanumeric combination.

**Claims**

1. An input data preprocessor (IDP) for facilitating image segmentation, comprising, when in use:

   an input port (IN) for receiving an input image to be segmented by an interactive machine learning based segmentor (SEG, M", M);
   a subset specifier (SS) capable to determine, based at least on the input image, a size specification (b) for an in-image subset; and
   an output interface (OUT) for providing the size specification for interaction with the segmentor (SEG).

2. The input data preprocessor (IDP) of claim 1, wherein the subset size specifier (SS) is based on a trained machine learning model (M',M).

3. The input data preprocessor (IDP) of claim 1 or 2, wherein the said size specification includes a geometrical parameter of the in-image subset.

4. The input data preprocessor (IDP) of claim 3, wherein the said geometrical parameter is at least one any one or more of i) a radius or diameter of the in-image subset, ii) a diagonal of the in-image subset, iii) a length of the in-image subset, iv) a volume of the in-image subset.

5. The input data preprocessor (IDP) of any one of preceding claims, wherein the said subset specifier (SS) configured to determine the size specification (b), further based on a previous size specification provided by a user via a user interface (UI).

6. The input data preprocessor (IDP) of claim 5, wherein the user input interface (UI) includes any one or more of i) a pointer tool, ii) a touch screen, iii) speech recognizer component, iii) a keyboard.

7. The input data preprocessor (IDP), of claim 5, wherein the segmentor (SEG) is capable to segment for an abdominal region of interest and/or a cancer lesion, wherein the abdominal region of interest includes at least a part of any one or more of liver, pancreas, pancreatic duct, pancreatic cancer tissue.

8. A system (IPS) of medical image segmentation comprising, the input data preprocessor (IDP) of any one of the previous claims, and one or more of: the interactive machine learning based segmentor (SEG) and the user interface (UI).

9. The system of claim 8, wherein the segmentor (SEG) is to compute a segmentation result (s) based on i) the input image, and on a subset of the input image receivable via the user interface (UI) and the said subset having the specified size as per the input data preprocessor (IDP).

10. A medical arrangement (MA) comprising the system of claims 8 or 9, and any one or more of i) a medical imaging apparatus (IA) supplying the input image, ii) a memory (IM) from which the input image is retrievable, iii) a resectability index computing unit (RCU) configurable to compute at least one resectability index based on the segmentation result.

11. A machine learning training system (TS) capable to train, based on training data, the machine learning model (M') of the subset specifier (SS) as per any one of claims 2-10.

12. A training data generator system (TDGS), capable to generate the training data for the training system as per claim 11.

13. A computer implemented method for facilitating medical image segmentation, comprising:

receiving (S410) an input image to be segmented by an interactive machine learning based segmentor;
determining (S420), based at least on the input image, a size specification (b) for an in-image subset; and
providing (S430) the size specification) for interaction with the segmentor.

14. At least one computer program element, which, when being executed by at least one processing unit (PU), is adapted to cause the at least one processing unit to perform the method as per claim 13.

15. At least one computer readable medium having stored thereon the program element of claim 13, or having stored thereon the machine learning model as per any one of claims 2-10.

**FIG. 1**

**FIG. 1A**

**FIG. 2**

FIG. 3

FIG. 3A

EP 4 428 815 A1

FIG. 4

FIG. 5

FIG. 6

Europäisches
Patentamt

European
Patent Office

Office européen
des brevets

# EUROPEAN SEARCH REPORT

Application Number

EP 23 16 0524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Region of interest – Wikipedia", , 12 July 2021 (2021-07-12), XP093080433, Retrieved from the Internet: URL:https://en.wikipedia.org/w/index.php?title=Region_of_interest&oldid=1033166000 [retrieved on 2023-09-11] * Par. 1 * | 1-15 | INV. G06T7/11 |
| X | ZHOU TIANFEI ET AL: "Volumetric memory network for interactive medical image segmentation", MEDICAL IMAGE ANALYSIS, vol. 83, 6 September 2022 (2022-09-06), page 102599, XP93078332, GB ISSN: 1361-8415, DOI: 10.1016/j.media.2022.102599 * Abstract, 1, 3.2, 3.5.2, 4.1.1, 4.2, 4.3 * | 1-15 | |
| A | LUO XIANGDE ET AL: "MIDeepSeg: Minimally interactive segmentation of unseen objects from medical images using deep learning", 18 May 2021 (2021-05-18), MEDICAL IMAGE ANALYSIS, OXFORD UNIVERSITY PRESS, OXOFRD, GB, XP086702558, ISSN: 1361-8415 [retrieved on 2021-05-18] * Section 2 * | 1-15 | TECHNICAL FIELDS SEARCHED (IPC) G06T |

The present search report has been drawn up for all claims

| Place of search | Date of completion of the search | Examiner |
|---|---|---|
| Munich | 12 September 2023 | Tibrewal-Fabricius |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. M. MITCHELL.** Machine Learning. McGraw-Hill, 1997, 2, , 6
- **JINGDING WANG et al.** Deep High-Resolution Representation Learning for Visual Recognition. *IEEE TRANSACTIONS ON PATTERN ANALYSIS AND MACHINE INTELLIGENCE,* March 2020
- **S. MAHADEVAN et al.** Iteratively trained interactive segmentation. *arXiv preprint arXiv: 1805.04398,* 2018